# EUROPEAN PATENT APPLICATION

(11) **EP 2 592 794 A1**
(43) Date of publication of application: **15.05.2013**
(21) Application number: 11806269.4
(22) Date of filing: 27.06.2011
(51) Int. Cl.: H04L 12/56, H04L 29/06

(54) **METHOD, SYSTEM AND EQUIPMENT FOR ESTABLISHING BEARER**

(30) Priority: 12.07.2010 CN 201010225798
(71) Applicant: ZTE Corporation, Shenzhen, Guangdong 518057 (CN)
(72) Inventor: CHEN, Fei, Shenzhen Guangdong 518057 (CN); HUANG, Lingyun, Shenzhen Guangdong 518057 (CN); DANG, Qi, Shenzhen Guangdong 518057 (CN); GAO, Shihong, Shenzhen Guangdong 518057 (CN)
(74) Representative: Jansen, Cornelis Marinus
(86) International application number: PCT/CN2011/076427
(87) International publication number: WO 2012/006927

(57) **Abstract**

The disclosure discloses method, system, and apparatus for establishing a bearer, wherein the method includes that: a BTS receives a first UDP port number and a first IP address from a BSC, and allocates a second UDP port number and a second IP address for the bearer to be established, wherein the first UDP port number and the first IP address is allocated by the BSC to a user plane bearer corresponding to a UE after the BSC determines that a channel needs to be activated for the UE; and the BTS establishes the user plane bearer according to the first UDP port number, the first IP address, the second UDP port number, and the second IP address. As the user plane bearer is established only when channel activation is needed for the UE in an embodiment of the disclosure, user-based packing of CS user plane data is implemented at a base station, achieving direct docking of GSM user plane data at the A interface and the Abis interface.

## Description

### TECHNICAL FIELD

The disclosure relates to the field of Radio Frequency (RF) communication techniques, and in particular to a method, system, and apparatus for establishing a bearer.

### BACKGROUND

With the rapid development of the mobile communication industry, especially the rapid application of multiple standards among the 3^{rd} and 4^{th} generation mobile communications, the demand increases for the Global System for Mobile Communications (GSM) to form a dual-mode or multi-mode base station system together with mobile communications of other standards. In this background, platformized mobile communication system apparatuses are increasingly developed and commercialized. Mobile communication system apparatuses are platformized while following the development of the internet, and most of the newly developed mobile communication system apparatuses adopt an all IP-based architecture.

In the access solution of an all IP-based interface of a GSM base station system, the Base Station Controller (BSC) can separately process control plane data and user plane data, making the architecture clearer for the BSC to process different types of software and hardware; the platformized BSC of all IP-based architecture can further provide cut-through forwarding between an Abis interface, which is the interface between the Base Transceiver Station (BTS) and the BSC, and an A interface for user data flow born by the Real-time Transport Protocol (RTP), so as to reduce user plane processing by the BSC to reduce software and hardware cost of the BSC.

To achieve direct docking of user data between the A interface and the Abis interface, it is required that the GSM base station system change the traditional processing mode of carrier frequency based user plane data packing according to characteristics of a GSM service, that is, a mechanism for the Circuit SwitchedDomain (CS) user plane data being packed according to the User Equipment (UE) is required. However, there is currently no UE based packing mechanism for the CS user plane data, thereby making the direct docking of the CS user plane data between the A interface and the Abis interface unavailable for the time.

To sum up, there is currently no UE based packing mechanism for the CS user plane data, making the direct docking of the CS user plane data between the A interface and the Abis interface unavailable.

### SUMMARY

Accordingly, the disclosure provides a method, system, and apparatus for establishing a bearer, for implementing the CS user plane data packing according to UE, and therefore the direct docking at the A interface and the Abis interface.

To solve the aforementioned technical problem, a method provided by an embodiment of the disclosure for establishing a bearer includes:
receiving, by a Base Transceiver Station (BTS), a first User Datagram Protocol (UDP) port number and a first Internet Protocol (IP) address from a Base Station Controller (BSC), and allocating, by the BTS, a second UDP port number and a second IP address for the bearer to be established, wherein the first UDP port number and the first IP address is allocated by the BSC to a user plane bearer corresponding to a User Equipment (UE) after the BSC determines that a channel needs to be activated for the UE; and
establishing, by the BTS, the user plane bearer according to the first UDP port number, the first IP address, the second UDP port number, and the second IP address.

A method provided by an embodiment of the disclosure for establishing a bearer includes:
when a Base Station Controller (BSC) determines that a channel needs to be activated for a User Equipment (UE), allocating, by the BSC, a first User Datagram Protocol (UDP) port number and a first Internet Protocol (IP) address to a user plane bearer corresponding to the UE; and
sending, by the BSC, the first UDP port number and the first IP address to a Base Transceiver Station (BTS), and indicating, by the BSC, the BTS to establish the user plane bearer for the UE according to the first UDP port number and the first IP address.

A system provided by an embodiment of the disclosure for establishing a bearer includes:
a Base Station Controller (BSC) configured to allocate a first User Datagram Protocol (UDP) port number and a first Internet Protocol (IP) address to a user plane bearer corresponding to the UE and send the first UDP port number and the first IP address when determining that a channel needs to be activated for a User Equipment (UE); and
a Base Transceiver Station (BTS) configured to receive the first UDP port number and the first IP address from the BSC, allocate a second UDP port number and a second IP address for the bearer to be established, and establish the user plane bearer according to the first UDP port number, the first I P address, the second UDP port number, and the second IP address.

A BTS provided by an embodiment of the disclosure includes: a Baseband Unit Controller (BUC), a Digital Baseband (DBB), and a Communication Control Module (CCM), wherein
the BUC is configured to receive a first User Datagram Protocol (UDP) port number and a first Internet Protocol (IP) address from a Base Station Controller (BSC), allocate a second UDP port number and a second IP address for a bearer to be established, send the first UDP port number, the first IP address, the second UDP port number, and the second IP address respectively to the DBB and the CCM, wherein the first UDP port number and the first IP address is allocated by the BSC to a user plane bearer corresponding to a User Equipment (UE) after the BSC determines that a channel needs to be activated for the UE;
the DBB is configured to perform channel activation according to channel information and the first UDP port number, the first IP address, the second UDP port number, and the second IP address; and
the CCM is configured to establish the user plane bearer according to the first UDP port number, the first IP address, the second UDP port number, and the second IP address.

A BSC provided by an embodiment of the disclosure includes:
an allocating module configured to allocate a first User Datagram Protocol (UDP) port number and a first Internet Protocol (IP) address to a user plane bearer corresponding to the UE when determining that a channel needs to be activated for a User Equipment (UE); and
a sending module configured to send the first UDP port number and the first IP address to a Base Transceiver Station (BTS), and indicate the BTS to establish the user plane bearer for the UE according to the first UDP port number and the first IP address.

As the user plane bearer is established only when channel activation is needed for the UE in an embodiment of the disclosure, user-based packing of CS user plane data is implemented at a base station, achieving direct docking of GSM user plane data at the A interface and the Abis interface;

Processing operations of user plane data on the BSC are reduced further, reducing the BSC cost and increasing the system stability; and the achieving of direct docking of GSM user plane data at the A interface and the Abis interface enables the GSM base station system to share platformized software and hardware of the BSC when forming bi-mode or multi-mode communicating base station system together with the 3^{rd} and 4^{th} mobile communications, thereby meeting the bi-mode and multi-mode demand of an operator with minimal cost.

### BRIEF DESCRIPTION OF THE DRAWINGS

Fig. 1 is the schematic view of the system structure for establishing a bearer of an embodiment according to the present disclosure;
Fig. 2 is the schematic view of the structure of the BSC of an embodiment according to the present disclosure;
Fig. 3 is the schematic view of the structure of the BTS of an embodiment according to the present disclosure;
Fig. 4 is the flowchart of a method for establishing a bearer according to a first embodiment of the present disclosure;
Fig. 5 is the flowchart of a method for establishing a bearer according to a second embodiment of the present disclosure; and
Fig. 6 is the flowchart of a method for dynamically establishing and deleting a bearer by a GSM base station according to an embodiment of the present disclosure.

### DETAILED DESCRIPTION

In an embodiment of the present disclosure, a BTS establishes a user plane bearer according to a first User Datagram Protocol (UDP) port number, a first IP address, a second UDP port number, and a second IP address, wherein the first UDP port number and the first IP address is allocated by a BSC to a channel corresponding to a UE after the BSC determines that a channel needs to be activated for the UE, and the second UDP port number and the second IP address is allocated by the BTS. As the user plane bearer is established only when channel activation is needed for the UE in an embodiment of the disclosure, user-based packing of CS user plane data is implemented at a base station, achieving direct docking of GSM user plane data at the A interface and the Abis interface.

The embodiments of the disclosure are further elaborated below with reference to the figures.

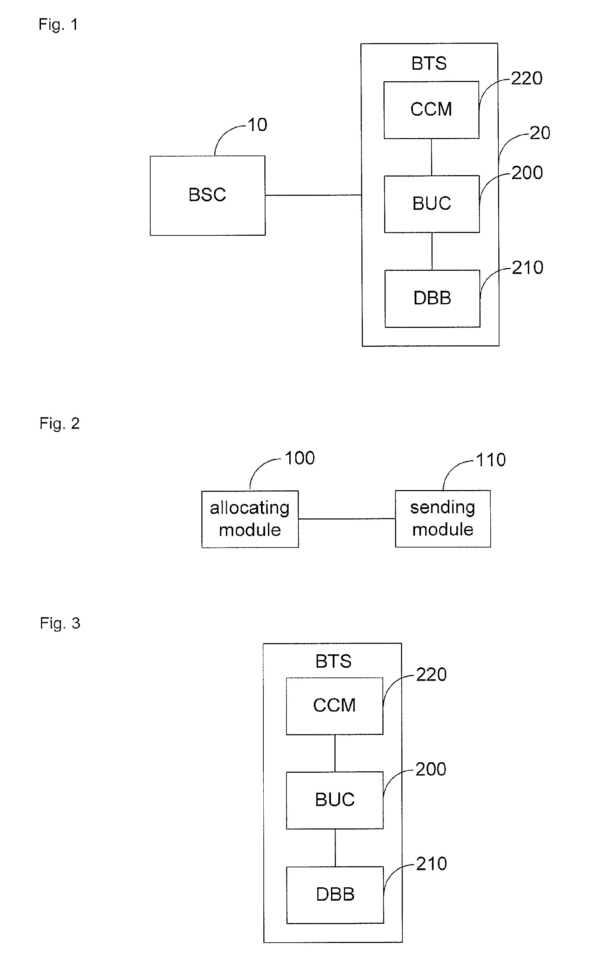

As shown in Fig. 1, a system for establishing a bearer according to an embodiment of the disclosure includes a BSC 10 and a BTS 20

The BSC 10 is configured to allocate a 1^{st} UDP port number and a 1^{st} IP address to a channel corresponding to the UE and send the 1^{st} UDP port number and the 1^{st} IP address after determining that a channel needs to be activated for a UE.

The BTS 20 is configured to receive the 1^{st} UDP port number and the 1^{st} IP address from the BSC 10, allocate a 2^{nd} UDP port number and a 2^{nd} IP address for the bearer needing to be established, and establish the user plane bearer according to the 1^{st} UDP port number, the 1^{st} IP address, the 2^{nd} UDP port number, and the 2^{nd} IP address

Specifically, after determining that a channel needs to be activated for the UE, the BSC 10 randomly allocates to the user plane bearer corresponding to the UE the 1^{st} UDP port number and 1^{st} IP address, which then may be sent to BTS 20 via a channel activation request (CHAN ACTIV) message.

To facilitate system troubleshooting and increase system testability, optionally, 1^{st} UDP port number adopts fixed allocation. Preferably, 2^{nd} port number adopts fixed allocation.

Wherein, after receiving 1^{st} UDP port number and 1^{st} IP address from BSC 10, BTS 20 performs channel activation, allocates 2^{nd} UDP port number and 2^{nd} IP address for the bearer to be established, establishes the user plane bearer according to 1^{st} UDP port number, 1^{st} IP address, 2^{nd} UDP port number, and 2^{nd} IP address, and then sends a channel activation acknowledgement (CHAN ACTIV ACK) message to BSC 10.

Specifically, the BTS according to an embodiment of the disclosure may further include: a Baseband Unit Controller (BUC) 200, a Digital Baseband (DBB) 210, and a Communication Control Module (CCM) 220.

BUC 200 receives the first UDP port number and the first IP address from BSC 10, allocates the second UDP port number and the second IP address for the bearer to be established, sends the first UDP port number, the first IP address, the second UDP port number, and the second IP address respectively to DBB 210 and CCM 220;

DBB 210 performs channel activation according to channel information and the first UDP port number, the first IP address, the second UDP port number, and the second IP address, and sends to BUC 200 a channel activation response message to indicate the result of the channel activation.

The CCM 220 establishes the user plane bearer according to the first UDP port number, the first IP address, the second UDP port number, and the second IP address, and sends to the BUC 200 a bearer establishing request acknowledgement message to indicate the result of processing a bearer establishing request. If the bearer establishing is successful, the acknowledgement message includes a Link ID, otherwise there is no Link ID in the acknowledgement message. What needs to be noted is that in a Packet SwitchedDomain (PS) service, the bearer requested by the bearer establishing request may exist already, thus the acknowledgement message includes the Link ID of the existing bearer.

In other words, the CCM 220 sends to the BUC 200 in the BTS 20 a Link ID corresponding to the user plane bearer after determining that the user plane bearer is established successfully.

The BUC 200 sends a channel activation acknowledgement message to BSC 10.

What needs to be noted is that in a CS service, in order to reduce the overall duration of the channel activation flow, the BUC 200 immediately sends to the BSC 10 a channel activation acknowledgement message after receiving a channel activation response message from the DBB 210 without waiting for a bearer establishing request acknowledgement message. If channel activation of the DBB 210 fails, the BUC 200 sends to the BSC 10 a channel activation negative acknowledgement message; in an extreme case where channel activation of the DBB 210 succeeds and the BUC 200 receives a bearer establishing request acknowledgement message from the CCM 220 indicating that bearer establishing fails, the BUC 200 initiates again a connection failing signalling with the BSC 10 to perform failure processing.

Since there is no such connection failing signalling after establishment of a PS service, the BUC 200 in the PS service has to send a only after acquiring a channel activation response message from the DBB 210 and a bearer establishing request acknowledgement message from the CCM 220, otherwise the BUC 200 sends to the BSC 10 a channel activation negative acknowledgement (CHAN ACTIV NACK) message.

After bearer establishing completes, the UE using the bearer can carry out a normal service, and is required to apply for deleting of the bearer after completing the service. Specifically, when the bearer needs to be deleted, the BSC 10 sends to the BTS 20 an RF channel release (RF CHAN REL) message including channel information of the channel to be released.

Accordingly, the BUC 200 in the BTS 20 determines the channel information (wherein the channel information includes a channel type and a time slot number) according to the RF CHAN REL message received, and sends to DBB 210 the channel information (sent via a channel release (CHP CHAN REL) message).

DBB 210 performs RF channel release according to the channel information received, and sends to BUC 200 the first UDP port number, the first IP address, the second UDP port number, and the second IP address of the user plane bearer corresponding to the released channel (which may be sent via a channel release acknowledgement (CHP CHAN RELACK) message);

DBB 210 determines a corresponding Link ID according to the first UDP port number, the first IP address, the second UDP port number, and the second IP address received from DBB 210, and sends to CCM 220 the Link ID (which may be sent via a bearer release indicating (LINK REL IND) message).

CCM 220 deletes the bearer corresponding to the Link ID.

Optionally, after the bearer is deleted, BUC 200 may further notify BSC 10 of successful deleting, for example via an RF channel release acknowledgement (RF CHAN RELACK) message.

Wherein, in case of a PS service, BUC 200 deletes the bearer of the PS when determining that there is no PS service on the bearer of the PS.

As shown in Fig. 2, the BSC according to an embodiment of the disclosure includes an allocating module 100 and a sending module 110. Wherein
the allocating module 100 is configured to allocate a first UDP port number and a first IP address to a user plane bearer corresponding to the UE when determining that a channel needs to be activated for a UE; and
the sending module 110 is configured to send to a BTS the first UDP port number and the first IP address allocated by the allocating module 100, and indicate the BTS to establish the user plane bearer for the UE according to the first UDP port number and the first IP address.

The specific implementation in which the allocating module 100 allocates the first UDP port number and the first IP address and the sending module 110 sends the first UDP port number and the first IP address may refer to relevant content of allocating and sending by the BSC in Fig. 1 and is therefore omitted.

Furthermore, when the bearer needs to be deleted, the sending module 110 sends an RF channel release message.

As shown in Fig. 3, the BTS according to an embodiment of the disclosure includes a BUC 200, a DBB 210, and a CCM 220, wherein
the BUC 200 is configured to receive the first UDP port number and the first IP address from the BSC, allocate the second UDP port number and the second IP address for the bearer to be established, send the first UDP port number, the first IP address, the second UDP port number, and the second IP address respectively to the DBB 210 and the CCM 220, wherein the first UDP port number and the first IP address is allocated by the BSC to a user plane bearer corresponding to a UE after the BSC determines that a channel needs to be activated for the UE;
the DBB 210 is configured to perform channel activation according to the first UDP port number, the first IP address, the second UDP port number, and the second IP address; and
the CCM 220 is configured to establish the user plane bearer according to the first UDP port number, the first IP address, the second UDP port number, and the second IP address.

Wherein, CCM 220 sends to the BUC 200 in the BTS a Link ID corresponding to the user plane bearer after determining that the user plane bearer is established successfully.

Wherein, the BUC 200 receives an RF channel release message from the BSC, sends channel information in the RF channel release message to the DBB 210, determines a corresponding Link ID according to the first UDP port number, the first IP address, the second UDP port number, and the second IP address received, and sends the Link ID to CCM 220 in the BTS;
the DBB 210 performs RF channel release according to the channel information, and sends to the BUC 200 the first UDP port number, the first IP address, the second UDP port number, and the second IP address corresponding to the released channel; and
the CCM 220 deletes the bearer corresponding to the Link ID.

Wherein, BUC 200 deletes the bearer of the PS when determining that there is no other PS service on the bearer of the PS.

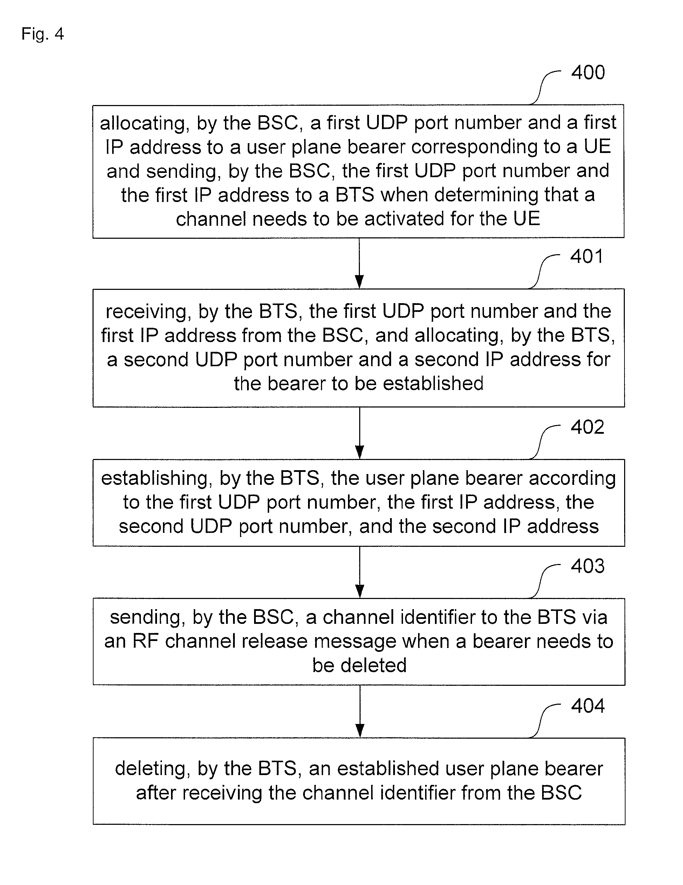

As shown in Fig. 4, a first method for establishing a bearer according to an embodiment of the disclosure includes the following steps.

Step 401. receiving, by a BTS, a first UDP port number and a first IP address from a BSC, and allocating, by the BTS, a second UDP port number and a second IP address for the bearer to be established, wherein the first UDP port number and the first IP address is allocated by the BSC to a user plane bearer corresponding to a UE after the BSC determines that a channel needs to be activated for the UE.

Step 402. establishing, by the BTS, the user plane bearer according to the first UDP port number, the first IP address, the second UDP port number, and the second IP address.

Wherein before Step 401, the method may further include:
Step 400. allocating, by the BSC, the first UDP port number and the first IP address to the user plane bearer corresponding to the UE when the BSC determines that a channel needs to be activated for the UE, and sending, by the BSC, the first UDP port number and the first IP address to the BTS.

Specifically, in Step 400, when determining that a channel needs to be activated for the UE, the BSC randomly allocates to the user plane bearer corresponding to the UE the 1^{st} UDP port number and 1^{st} IP address, which then may be sent to the BTS via a channel activation request message.

To facilitate system troubleshooting and increase system testability, optionally, 1^{st} UDP port number adopts fixed allocation. Preferably, 2^{nd} port number adopts fixed allocation. The allocation of the CS and PS UDP port number (namely, the 2^{nd} UDP port number) is described below with the example wherein the BTS supports 5 base band processing boards, each of which may support 12 carriers.

PS service data is packed according to carrier frequency, and the RTP and RTCP (Real-time Transport Control Protocol) UDP port number is allocated according to the carrier. The PS service port number ranges within 21384 ∼ 21503, namely 0x5388 ∼ 0x53FF. The rules for calculating the port number are as follows.

The PS RTP port number is calculated as:
21384+(base band processing board number<0∼4> × 12+carrier number<0∼1 >) X2

The PS RTCP port number is calculated as:
21384+( base band processing board number <0∼4> × 12+ carrier number <0∼ 11>)×2+1

In the case of CS service, the RTP and RTCP UDP port number is allocated according to the user, and the CS service port number ranges within 21504∼29695, namely 0x5400∼0x73FF.

Wherein of the port number, bit15 is fixed to "0", bit14 is fixed to "1", and the rules for calculating the other bits are shown as follows:

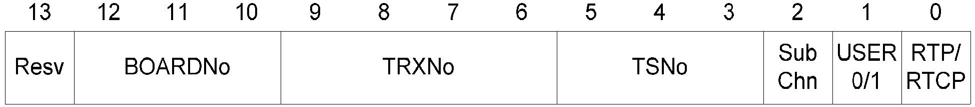

wherein

| | | |
|---|---|---|
| Bit0 | RTP/RTCP | 0 represents RTP; 1 represents RTCP |
| Bit1 | User0/1 | 0 represents user 0; 1 represents user 1 |
| Bit2 | SubChn | represents subchannel number |
| Bit3 ∼ 5 | TSNo | time slot number 0 ∼ 7 |
| Bit6 ∼ 9 | TRXNo | carrier number on base band processing board, 0 ∼ 11 |
| Bit10 ∼ 12 | BoardNo | base band processing board number, 0 ∼ 4 |
| Bit13 | Resv | reserved bit |

It needs to be noted that the aforementioned is merely illustrative description and other fixed allocation may also be adopted in the case of the BTS supporting 5 base band processing boards. The allocation for a case in which the BTS supports other number of base band processing boards is similar as the aforementioned allocation and will not be elaborated herein further.

In another embodiment for the method of the disclosure, the BTS according to an embodiment of the disclosure includes a BUC, a DBB, and a CCM.

The BUC performs base band control, including relevant configuration management of GSM carrier frequency, alert management, GSM service signalling processing, bearer establishing and deleting, and the like.

The DBB performs digital base band processing including user plane data modulation-demodulation and control plane signalling processing of GSM service and the like.

The CCM is in charge of BTS communicating link control, including bearer relation management and maintenance such as bearer establishing, deleting, and surviving.

The CCM is further in charge of forwarding of user plane bearer data between the BSC and the DBB according to the bearer relation. The forwarding process includes that: the CCM establishes a bearer relation table of bearer formation according to bearer information, wherein the bearer relation table includes information of the UDP port number and the IP address of the BSC and BTS, as well as relevant information of the DBB associated with the bearer; a data processing chip of the CCM performs bearer matching and packet head replacing of a data packet for uplink and downlink data between the BSC and the DBB according to the bearer relation table; the uplink and downlink data between the BSC and the DBB is sent on the correctly matched passage after data packet head replacing completes, to complete data forwarding.

Specifically, in step 401, after receiving the 1^{st} UDP port number and the 1^{st} IP address from the BSC, the BUC allocate a 2^{nd} UDP port number and a 2^{nd} IP address for the bearer needing to be established.

In step 402, the BUC sends the first UDP port number, the first IP address, the second UDP port number, and the second IP address respectively to the DBB and the CCM;

The DBB in the BTS performs channel activation according to the first UDP port number, the first IP address, the second UDP port number, the second IP address, and channel information in a channel activation request, and sends to the BUC in the BTS a channel activation response message to indicate the result of the channel activation;

The CCM in the BTS establishes the user plane bearer according to the first UDP port number, the first IP address, the second UDP port number, and the second IP address, and sends to the BUC a bearer establishing request acknowledgement message to indicate the result of processing a bearer establishing request. If the bearer establishing is successful, the acknowledgement message includes a Link ID, otherwise there is no Link ID in the acknowledgement message.

In other words, the CCM sends to the BUC in the BTS a Link ID corresponding to the user plane bearer after determining that the user plane bearer is established successfully.

In addition, in step 402, the BUC may further send a channel activation acknowledgement message to the BSC.

What needs to be noted is that in a CS service, in order to reduce the overall duration of the channel activation flow, the BUC immediately sends to the BSC a channel activation acknowledgement message after receiving a channel activation response message from the DBB without waiting for a bearer establishing request acknowledgement message. If channel activation of the DBB fails, the BUC sends to the BSC a channel activation negative acknowledgement message; in an extreme case where channel activation of the DBB succeeds and the BUC receives a bearer establishing request acknowledgement message from the CCM indicating that bearer establishing fails, the BUC initiates again a connection failing signalling with the BSC to perform failure processing.

Since there is no such connection failing signalling after establishment of a PS service, the BUC in the PS service has to send a only after acquiring a channel activation response message from the DBB and a bearer establishing request acknowledgement message from the CCM, otherwise the BUC sends to the BSC a channel activation negative acknowledgement message.

After bearer establishing completes, the UE using the bearer can carry out a normal service, and is required to apply for deleting of the bearer after completing the service. Specifically, after step 402, the method may further include the following steps.

Step 403. when a bearer needs to be deleted, the BSC may send the channel identifier to the BTS via the RF channel release message.

Step 404. the BTS receives the channel identifier from the BSC and deletes the established user plane bearer.

Specifically, in step 404, the BUC determines channel information (wherein the channel information includes a channel type and a time slot number) according to the received channel identifier, and sends the channel information to the DBB.

The DBB performs RF channel release according to the channel information received, and sends to the BUC the first UDP port number, the first IP address, the second UDP port number, and the second IP address corresponding to the released channel;

The DBB determines a corresponding Link ID according to the first UDP port number, the first IP address, the second UDP port number, and the second IP address received from the DBB, and sends to the CCM the Link ID.

The CCM deletes the bearer corresponding to the Link ID after receiving the Link ID.

Optionally, after the bearer is deleted, the BUC may further notify the BSC of successful deleting, for example via an RF channel release acknowledgement message.

Wherein after sending to the BUC in the BTS the first UDP port number, the first IP address, the second UDP port number, and the second IP address, the DBB may further determines whether there is any PS service on the PS bearer, and delete the PS bearer if it determines that there is no other PS service on the PS bearer, otherwise the BUC keeps the PS bearer.

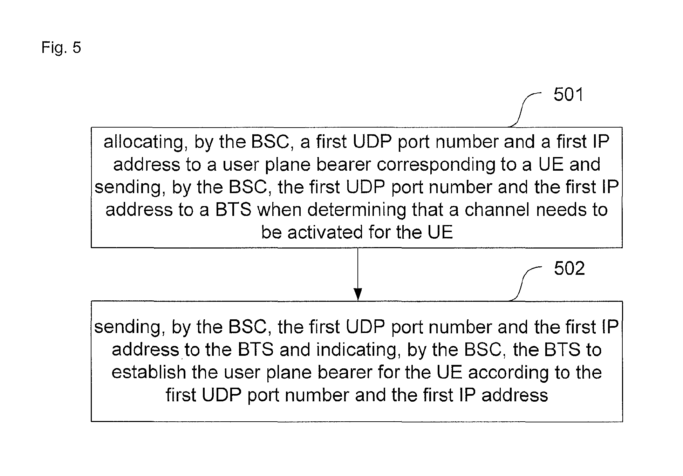

As shown in Fig. 5, the 2^{nd} method for establishing a bearer according to an embodiment of the disclosure includes:
Step 501. allocating, by the BSC, a first UDP port number and a first IP address to a user plane bearer corresponding to the UE when determining that a channel needs to be activated for a UE; and
Step 502. sending, by the BSC, the first UDP port number and the first IP address to a BTS and indicating, by the BSC, the BTS to establish the user plane bearer for the UE according to the first UDP port number and the first IP address.

Wherein, one may refer to the content with respect to step 400 in Fig. 4 for the specific content of steps 501 and 502, which will not be elaborated further herein.

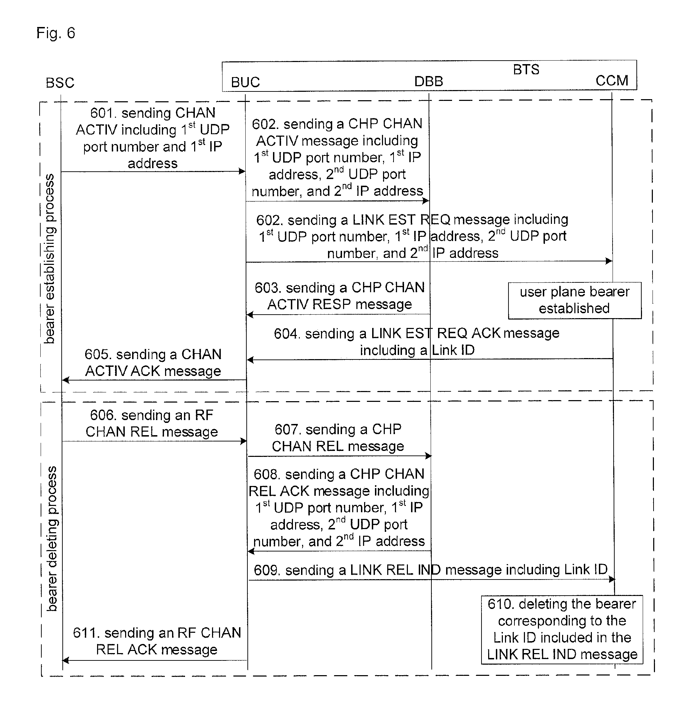

As shown in Fig. 6, the method for dynamically establishing and deleting a bearer by a GSM base station according to an embodiment of the disclosure includes the following steps.

Step 601. The BSC allocates a first UDP port number and a first IP address to a channel corresponding to the UE and sends to the BTS a CHAN ACTIV (channel activation request) message including the 1^{st} UDP port number and the 1^{st} IP address when determining that a channel needs to be activated for a UE.

Step 602. after receiving the 1^{st} UDP port number and the 1^{st} IP address from the BSC, the BUC of the BTS allocates a 2^{nd} UDP port number and a 2^{nd} IP address for the bearer needing to be established, sends to the DBB a CHP CHAN ACTIV (channel activation) message including the 1^{st} UDP port number, the 1^{st} IP address, the 2^{nd} UDP port number, and the 2^{nd} IP address, and sends to the CCM a LINK EST REQ (bearer establishing request) message including the 1^{st} UDP port number, the 1^{st} IP address, the 2^{nd} UDP port number, and the 2^{nd} IP address.

Step 603. The DBB performs channel activation after receiving the CHP CHAN ACTIV message, and sends to the BUC a CHP CHAN ACTIV RESP (channel activation response) message to indicate the result of the channel activation after the channel activation is completed.

Step 604. After receiving the LINK EST REQ message, the CCM establishes the user plane bearer according to the first UDP port number, the first IP address, the second UDP port number, and the second IP address, and sends to the BUC a LINK EST REQ ACK (bearer establishing request acknowledgement) message to indicate the result in processing the bearer establishing request.

It is to be noted that there is no definite time sequence relation between steps 603 and 604, which needs to be decided according to the speed at which the DBB and the CCM receive a message and perform processing. For example, the DBB and the CCM may execute steps 603 and 604 simultaneously when receiving a message simultaneously.

Step 605. The BUC sends to the BSC a CHAN ACTIV ACK (channel activation acknowledgement) message.

In a CS service, as bearer establishing on the CCM will succeed in most cases and bearer establishing failure occurs only in a few extreme cases, in order to reduce the overall duration of the channel activation flow, the BUC may immediately send a CHAN ACTIV ACK message after receiving a CHP CHAN ACTIV RESP message. If channel activation of the DBB fails, the BUC sends to the BSC a CHAN ACTIV NACK message, thus time spent in interacting with the CCM by the BUC is exempted in the overall channel activation flow; if in an extreme case where after the BUC sends to the BSC the CHAN ACTIV ACK message, the BUC receives a LINK EST REQ ACK message indicating that bearer establishing fails, the BUC initiates again a connection failing (ABIS CONNECT FAIL IND) signalling with the BSC to perform failure processing.

If bearer establishing completes, it is further required to delete a bearer when the UE concludes a service and no longer uses the bearer.

Step 606. The BSC sends to the BUC an RF CHAN REL (RF channel release) message.

Step 607. The BUC determines channel information according to the channel identifier included in the RF CHAN REL message, and sends to the DBB a CHP CHAN REL (channel release) message including the channel information.

Step 608. The DBB determines and releases a corresponding RF channel according to the channel information, and sends to the BUC a CHP CHAN REL ACK (channel release acknowledgement) message after completing RF channel release, wherein the CHP CHAN REL ACK message includes the first UDP port number, the first IP address, the second UDP port number, and the second IP address corresponding to the released channel.

Step 609. The BUC determines a corresponding Link ID according to the first UDP port number, the first IP address, the second UDP port number, and the second IP address, and sends to the CCM a LINK REL IND (bearer release indicating) message including the Link ID.

Step 610. The CCM deletes the bearer corresponding to the Link ID included in the LINK REL IND message.

Step 611. The BUC sends to the BSC an RF CHAN REL ACK (RF channel release acknowledgement) message.

A skilled person in the art will understand that an embodiment of the disclosure may be provided as a method, a system, or a computer program product. Therefore, the disclosure may adopt a form such as an all-hardware embodiment, all-software embodiment, or embodiment combining aspects of software and hardware. Moreover, the disclosure may adopt a form as a computer program product implemented on one or more computer usable storage media, including but not limited to magnetic disk storage, CD-ROM, optical storage, and the like, containing computer usable program codes.

The disclosure is described with reference to a flowchart and/or a block diagram of a computer program product, an apparatus (system), and a method. It should be understood that each flow and/or block in the flowchart and/or the block diagram as well as combination of flows and/or blocks in the flowchart and/or the block diagram may be implemented via computer program instructions. These computer program instructions may be provided to a general computer, dedicated computer, embedded processor, or the processor of other programmable data processing apparatuses, to generate a machine, such that a device configured to implement the function designated in one or more flows in the flowchart and/or one or more blocks in the block diagram is generated through instructions executed by the processor of other programmable data processing apparatuses or a computer.

These computer program instructions can also be stored in computer readable storage capable of guiding a computer or other programmable data processing apparatuses to operate in a certain way, such that the instructions stored in the computer readable storage generate a manufacture including an instruction device which implements the function designated in one or more flows in the flowchart and/or one or more blocks in the block diagram.

These computer program instructions can also be loaded onto a computer or other programmable data processing apparatuses, so as to execute a series of operational steps on the computer (or other programmable data processing apparatuses) to generate computer-implemented processing, therefore the instructions executed on the computer (or other programmable apparatuses) provide the steps for implementing the function designated in one or more flows in the flowchart and/or one or more blocks in the block diagram.

Although preferred embodiments of the disclosure are described, a skilled person of the art may make alternative modifications and variations to these embodiments once he or she knows the basic inventive concept. Therefore, it is intended that the claims are interpreted as including the preferred embodiments and all modifications and variations falling within the scope of the disclosure.

It can be seen from the aforementioned embodiments that: the BTS according to an embodiment of the disclosure receives a first UDP port number and a first IP address from a BSC, and allocates a second UDP port number and a second IP address for the bearer to be established, wherein the first UDP port number and the first IP address are allocated by the BSC to a user plane bearer corresponding to a UE after the BSC determines that a channel needs to be activated for the UE; and the BTS establishes the user plane bearer according to the first UDP port number, the first IP address, the second UDP port number, and the second IP address.

As the user plane bearer is established only when channel activation is needed for the UE in an embodiment of the disclosure, user-based packing of CS user plane data is implemented at a base station, achieving direct docking of GSM user plane data between the A interface and the Abis interface.

Operations of processing user plane data on the BSC are reduced further, reducing the BSC cost and increasing the system stability; and the achieving of direct docking of GSM user plane data between the A interface and the Abis interface enables the GSM base station system to share platformized software and hardware of the BSC when forming dual-mode or multi-mode communicating base station system together with the 3^{rd} and 4^{th} mobile communications, thereby meeting the dual-mode and multi-mode demand of an operator with minimal cost.

Apparently, a skilled person in the art may make various modifications and variations to the disclosure without departing from the scope of the disclosure. Thus, the disclosure is intended to encompass these modifications and variations provided that these modifications and variations to the disclosure fall within the scope of the claims of the disclosure and equivalent techniques thereof.

## Claims

1. A method for establishing a bearer, comprising:
receiving, by a Base Transceiver Station (BTS), a first User Datagram Protocol (UDP) port number and a first Internet Protocol (IP) address from a Base Station Controller (BSC), and allocating, by the BTS, a second UDP port number and a second IP address for the bearer to be established, wherein the first UDP port number and the first IP address is allocated by the BSC to a user plane bearer corresponding to a User Equipment (UE) after the BSC determines that a channel needs to be activated for the UE; and
establishing, by the BTS, the user plane bearer according to the first UDP port number, the first IP address, the second UDP port number, and the second IP address.

2. The method according to claim 1, wherein the establishing, by the BTS, the user plane bearer comprises:
sending, by a Baseband Unit Controller (BUC) in the BTS, the first UDP port number, the first IP address, the second UDP port number, and the second IP address respectively to a Digital Baseband (DBB) in the BTS and a Communication Control Module (CCM) in the BTS;
performing, by the DBB in the BTS, channel activation according to the first UDP port number, the first IP address, the second UDP port number, and the second IP address received ; and
establishing, by the CCM in the BTS, the user plane bearer according to the first UDP port number, the first IP address, the second UDP port number, and the second IP address.

3. The method according to claim 2, further comprising: after establishing, by the CCM in the BTS, the user plane bearer,
sending, by the CCM in the BTS, to the BUC in the BTS a Link identification (ID) corresponding to the user plane bearer after the CCM in the BTS determines that the user plane bearer is established successfully.

4. The method according to claim 2, further comprising: after performing, by the DBB in the BTS, channel activation,
sending, by the DBB in the BTS, a channel activation response message to the BUC in the BTS; and
receiving, by the BUC in the BTS, the channel activation response message, and sending, by the BUC in the BTS, a channel activation acknowledgement message to the BSC.

5. The method according to any of claims 2 to 4, further comprising: after establishing, by the BTS, the user plane bearer,
determining, by the BUC in the BTS, channel information corresponding to a channel to be released according to an RF channel release message received, and sending, by the BUC in the BTS, the channel information to the DBB in the BTS;
performing, by the DBB in the BTS, RF channel release according to the channel information, and sending, by the DBB in the BTS, to the BUC in the BTS the first UDP port number, the first IP address, the second UDP port number, and the second IP address corresponding to the released channel;
determining, by the BUC in the BTS, a corresponding Link ID according to the first UDP port number, the first IP address, the second UDP port number, and the second IP address, and sending, by the BUC in the BTS, the Link ID to the CCM in the BTS; and
deleting, by the CCM in the BTS, the bearer corresponding to the Link ID.

6. A method for establishing a bearer, comprising:
when a Base Station Controller (BSC) determines that a channel needs to be activated for a User Equipment (UE), allocating, by the BSC, a first User Datagram Protocol (UDP) port number and a first Internet Protocol (IP) address to a user plane bearer corresponding to the UE; and
sending, by the BSC, the first UDP port number and the first IP address to a Base Transceiver Station (BTS), and indicating, by the BSC, the BTS to establish the user plane bearer for the UE according to the first UDP port number and the first IP address.

7. A system for establishing a bearer, comprising:
a Base Station Controller (BSC) configured to allocate a first User Datagram Protocol (UDP) port number and a first Internet Protocol (IP) address to a user plane bearer corresponding to the UE and send the first UDP port number and the first IP address when determining that a channel needs to be activated for a User Equipment (UE); and
a Base Transceiver Station (BTS) configured to receive the first UDP port number and the first IP address from the BSC, allocate a second UDP port number and a second IP address for the bearer to be established, and establish the user plane bearer according to the first UDP port number, the first I P address, the second UDP port number, and the second IP address.

8. The system according to claim 7, wherein the BTS comprises a Baseband Unit Controller (BUC), a Digital Baseband (DBB), and a Communication Control Module (CCM), wherein
the BUC is configured to receive the first UDP port number and the first IP address from the BSC, allocate the second UDP port number and the second IP address for the bearer to be established, send the first UDP port number, the first IP address, the second UDP port number, and the second IP address respectively to the DBB and the CCM;
the DBB is configured to perform channel activation according to the first UDP port number, the first IP address, the second UDP port number, and the second IP address; and
the CCM is configured to establish the user plane bearer according to the first UDP port number, the first IP address, the second UDP port number, and the second IP address.

9. The system according to claim 8, wherein the CCM is further configured to
send to the BUC in the BTS a Link ID corresponding to the user plane bearer after determining that the user plane bearer is established successfully.

10. The system according to claim 8, wherein
the DBB is further configured to send a channel activation response message to the BUC after performing channel activation; and
the BUC is further configured to receive the channel activation response message and send a channel activation acknowledgement message to the BSC.

11. The system according to any of claims 8-10, wherein
the BSC is further configured to send an RF channel release message when the bearer needs to be deleted;
the BUC is further configured to determine channel information corresponding to a channel to be released according to the RF channel release message received, send the channel information to the DBB, determine a corresponding Link ID according to the first UDP port number, the first IP address, the second UDP port number, and the second IP address received, and send the Link ID to the CCM;
the DBB is further configured to perform RF channel release according to the channel information, and send to the BUC the first UDP port number, the first IP address, the second UDP port number, and the second IP address corresponding to the released channel; and
the CCM is further configured to delete the bearer corresponding to the Link ID.

12. A Base Transceiver Station (BTS), comprising: a Baseband Unit Controller (BUC), a Digital Baseband (DBB), and a Communication Control Module (CCM), wherein
the BUC is configured to receive a first User Datagram Protocol (UDP) port number and a first Internet Protocol (IP) address from a Base Station Controller (BSC), allocate a second UDP port number and a second IP address for a bearer to be established, send the first UDP port number, the first IP address, the second UDP port number, and the second IP address respectively to the DBB and the CCM, wherein the first UDP port number and the first IP address is allocated by the BSC to a user plane bearer corresponding to a User Equipment (UE) after the BSC determines that a channel needs to be activated for the UE;
the DBB is configured to perform channel activation according to channel information and the first UDP port number, the first IP address, the second UDP port number, and the second IP address; and
the CCM is configured to establish the user plane bearer according to the first UDP port number, the first IP address, the second UDP port number, and the second IP address.

13. The BTS according to claim 12, wherein the CCM is further configured to
send to the BUC in the BTS a Link ID corresponding to the user plane bearer after determining that the user plane bearer is established successfully.

14. The BTS according to claim 12, wherein
the DBB is further configured to send a channel activation response message to the BUC after performing channel activation; and
the BUC is further configured to receive the channel activation response message and send a channel activation acknowledgement message to the BSC.

15. The BTS according to any of claims 12-14, wherein
the BUC is further configured to receive an RF channel release message from the BSC, determine channel information corresponding to a channel to be released, send the channel information to the DBB, determine a corresponding Link ID according to the first UDP port number, the first IP address, the second UDP port number, and the second IP address received, and send the Link ID to the CCM in the BTS;
the DBB is further configured to perform RF channel release according to the channel information, and send to the BUC the first UDP port number, the first IP address, the second UDP port number, and the second IP address corresponding to the released channel; and
the CCM is further configured to delete the bearer corresponding to the Link ID.

16. A Base Station Controller (BSC), comprising
an allocating module configured to allocate a first User Datagram Protocol (UDP) port number and a first Internet Protocol (IP) address to a user plane bearer corresponding to the UE when determining that a channel needs to be activated for a User Equipment (UE); and
a sending module configured to send the first UDP port number and the first IP address to a Base Transceiver Station (BTS), and indicate the BTS to establish the user plane bearer for the UE according to the first UDP port number and the first IP address.
